(19) Europäisches Patentamt / European Patent Office / Office européen des brevets

(11) **EP 3 980 670 B1**

(12) **EUROPÄISCHE PATENTSCHRIFT**

(45) Veröffentlichungstag und Bekanntmachung des Hinweises auf die Patenterteilung:
**28.02.2024   Patentblatt 2024/09**

(21) Anmeldenummer: **20739569.0**

(22) Anmeldetag: **04.06.2020**

(51) Internationale Patentklassifikation (IPC):
**F16H 19/04** *(2006.01)*   **F16H 25/18** *(2006.01)*
**F16H 31/00** *(2006.01)*   **F16H 25/12** *(2006.01)*
**B60N 2/06** *(2006.01)*   **F16H 25/20** *(2006.01)*

(52) Gemeinsame Patentklassifikation (CPC):
**B60N 2/067; F16H 19/04; F16H 25/12; F16H 25/18; F16H 31/007**

(86) Internationale Anmeldenummer:
**PCT/EP2020/065448**

(87) Internationale Veröffentlichungsnummer:
**WO 2020/245252 (10.12.2020 Gazette 2020/50)**

(54) **LINEARANTRIEB, LÄNGSVERSTELLEINHEIT EINES SITZES UND KRAFTFAHRZEUG**

**LINEAR ACTUATOR, LONGITUDINAL ADJUSTMENT DEVICE OF A SEAT AND MOTOR VEHICLE**

**ENTRAINEMENT LINÉAIRE, DISPOSITIF DE RÉGLAGE LONGITUDINAL D'UN SIÈGE ET VÉHICULE AUTOMOBILE**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2019   EP 19178264**

(43) Veröffentlichungstag der Anmeldung:
**13.04.2022   Patentblatt 2022/15**

(73) Patentinhaber: **IMS Gear SE & Co. KGaA**
**78166 Donaueschingen (DE)**

(72) Erfinder:
• **WERSCHLER, Marco**
**78315 Radolfzell (DE)**
• **MITTELBACH, Marcel**
**79859 Schluchsee (DE)**

• **TEICHMANN, Robin**
**78467 Konstanz (DE)**
• **MAUCH, Fabio**
**78056 Villingen-Schwenningen (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
**EP-A1- 0 482 827      EP-A1- 0 612 935**
**EP-A1- 0 879 976      EP-A1- 2 541 098**
**EP-B1- 0 612 935      EP-B1- 2 541 098**
**WO-A1-2005/032878   WO-A1-2008/028540**
**DE-A1- 19 932 046**

**Beschreibung**

Die vorliegende Erfindung betrifft einen Linearantrieb mit den Merkmalen des Anspruchs 1, eine Längsverstelleinheit für einen Sitz mit den Merkmalen des Anspruchs 21 und ein Kraftfahrzeug mit den Merkmalen des Anspruchs 22.

Linearantriebe sind aus dem Stand der Technik in unterschiedlichen Ausgestaltungen vorbekannt und werden verbreitet als Längsverstelleinheiten zum Verstellen der Position eines Sitzes in Kraftfahrzeugen verwendet. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist und mit dem Sitz gekoppelt ist. Das Verstellen der Oberschiene durch die Längsverstelleinheit erfolgt im Stand der Technik typischer Weise mittels einer Spindel, welche innerhalb der Oberschiene angeordnet ist und an ihrem jeweiligen ersten Ende und zweiten Ende abgestützt ist.

Derartige Längsverstelleinheiten sind beispielsweise aus der DE 36 40 197 A1, DE 42 08 948 C2, DE 196 42 655 C2, DE 198 15 283 A1, DE 10 2004 013 009 A1 und DE 10 2006 052 936 A1 bekannt.

Aus der EP 0 612 935 A1 ist ein weiterer Linearantrieb vorbekannt, wobei ein Bewegungs-Umwandlungsmechanismus verwendet wird, um bewegliche Platten zu bewegen.

Aufgrund der hohen Anforderungen an einen Linearantrieb, welcher neben der Verstellfunktion als Längsverstelleinheit auch eine Unfallsicherheit gewährleisten muss, weisen derartige Linearantriebe unterschiedliche Bauformen auf, die unterschiedliche Fertigungsmethoden und Verfahren erfordern. Es hat sich gezeigt, dass eine spielfreie Linearbewegung nur mit hohem Aufwand zu realisieren ist und dass die Bruchlasten nur aufwändig anzupassen sind. Auch neuartige Innenraumkonzepte von Kraftfahrzeugen fordern neben der Unfallsicherheit größere Verfahrwege und höhere Verfahrgeschwindigkeiten. Eine weitere Steigerung der Verfahrgeschwindigkeit von in der Vergangenheit bewährten Linearantrieben mit einer Spindel ist nur bedingt möglich. Größere Verfahrwege ermöglichen neue Raumkonzepte, wobei zur Realisierung neuer Raumkonzepte die beteiligten Komponenten nicht in den Raum ragen sollten. Vielmehr ist es gefordert, dass die beteiligten Komponenten in den Untergrund insbesondere eines Kraftfahrzeuges integrierbar sind, um Verletzungsquellen zu reduzieren und unauffällig zu sein.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Nachteile beseitigt. Weiterhin soll ein Linearantrieb mit einer besonders kompakten Bauweise angegeben werden, welche eine nahezu spielfreie Linearbewegung bei gleichzeitiger variabler und anpassbarer Bruchlast ermöglicht. Darüber hinaus soll mit dem erfindungsgemäßen Linearantrieb eine hohe Verstellgeschwindigkeit realisiert werden können.

Diese Aufgaben werden durch einen Linearantrieb mit den Merkmalen des Anspruchs 1, eine Längsverstelleinheit mit den Merkmalen des Patentanspruchs 21 sowie mit einem Kraftfahrzeug mit den Merkmalen des Patentanspruchs 22 gelöst.

Der erfindungsgemäße Linearantrieb mit den Merkmalen des Patentanspruchs 1 weist eine um eine Längsachse drehbare Antriebswelle, mindestens ein einen Vortriebzahn aufweisendes Vortriebelement, eine Zahnstange und mindesten ein Führungsmittel auf, wobei das mindestens eine Vortriebelement mit der Antriebswelle derart gekoppelt ist, dass das Vortriebelement bei einer Drehung der Antriebswelle um die Längsachse einer zyklischen Bewegung folgt und dessen Vortriebzahn zur Erzeugung eines Vorschubs in die Zahnstange eingedrückt wird, und wobei das mindestens eine Führungsmittel beim Eindrücken des mindestens einen Vortriebzahns in die Zahnstange ein der Zahnstange entgegen wirkendes Widerlager bildet. Das Führungsmittel nimmt eine beim Eindrücken des Vortriebzahns des mindestens einen Vortriebelementes resultierende Kraft oder Kraftkomponente auf, die quer zu der Längsachse auf das Vortriebelement wirkt.

Der Erfindung liegt die Idee zugrunde, dass das mindestens eine Vortriebelement bei einer vollständigen Umdrehung der Antriebswelle um die Längsachse wenigstens einer vollständigen zyklischen Bewegung folgt und zum Erzeugen des Vortriebs der Vortriebzahn in die Zahnstange ein- und anschließend wieder ausgedrückt wird.

Beim Eindrücken steht der mindestens eine Vortriebzahn des mindestens einen Vortriebelements in Wirkkontakt mit der Zahnstange, bzw. kann bevorzugt vollständig in einen Zahnzwischenraum zwischen zwei Zähnen der Zahnstange eingedrückt sein, und kann in diesem Zustand zwischen dem mindestens einen Führungsmittel und der Zahnstange verkeilt sein, wobei das mindestens eine Führungsmittel die resultierende Kraft bzw. Kraftkomponente in der Ebene der Zahnstange bzw. in eine Tangentialrichtung als Widerlager aufnehmen kann, wodurch keine zusätzlichen Querkräfte auf die Antriebswelle wirken und eine hohe Bruchlast des Linearantriebs gewährleistet ist.

Weiterhin wird hier und im Nachfolgenden unter einer zyklischen Bewegung ein Bewegungsablauf des mindestens einen Vortriebzahns des mindestens einen Vortriebelements verstanden, in welchem der mindestens eine Vortriebzahn von einem Ausgangspunkt einmal in die Zahnstange eingedrückt wird und einmal vollständig aus der Zahnstange austaucht und zum Ausgangspunkt zurückkehrt und vice versa. Der jeweilige Vortriebzahn kann während einer Umdrehung der Antriebswelle eine oder mehrere vollständige Perioden bzw. Zyklen durchlaufen, wobei die Anzahl der Perioden bzw. Zyklen immer einer ganzen Zahl entspricht.

Beim Eintauchen des mindestens einen Vortriebzahns in die Zahnstange kommen die Zähne der Zahnstange und die Vortriebzähne in einen Wirkkontakt, woraus ein Vortrieb in der Längsachse resultiert. Zu diesem Zweck taucht der jeweilige Vortriebzahn in die Zahnstange bzw. in den Zahnzwischenraum zwischen zwei Zähnen ein, wobei der Vortriebzahn und der Zahn der Zahnstange an sogenannten Reibflächen in Wirkkontakt kommen, woraus der Vortrieb resultiert. Hierzu ist es erforderlich, dass wenigstens die Zähne und/oder die Vortriebzähne mindestens eine Reibfläche aufweisen, vorzugsweise zwei Reibflächen, die nach Art einer Keilfläche ausgebildet sind.

Nach Maßgabe einer Weiterbildung der vorliegenden Erfindung ist es vorgesehen, dass das mindestens eine Führungsmittel die Bewegung des mindestens einen Vortriebzahns in Richtung der Zahnstange umlenkt. Durch das mindestens eine Führungsmittel wirkt auf den mindestens einen Vortriebzahn während der Bewegung bzw. Hubbewegung eine Kraft, durch die eine Umlenkung in eine Tangentialrichtung erfolgt. Der mindestens eine Vortriebzahn folgt in dieser Weiterbildung folglich einer Schwenkbewegung.

Weiterhin hat es sich als vorteilhaft erwiesen, wenn das mindestens eine Führungsmittel die Bewegung um eine Drehachse und/oder entlang einer Kulisse oder eines Momentanpols vorgibt. In der Drehachse kann der mindestens eine Vortriebzahn schwenkbeweglich gelagert gehalten werden. Die Kulisse kann bevorzugter Weise eine als Kontaktfläche ausgebildete Führung aufweisen, an der ein Wirkkontakt zwischen dem mindestens einen Führungsmittel und dem mindestens einen Vortriebzahn vorliegt. Die Kulisse kann die Bewegung des mindestens einen Vortriebelements in eine Bewegung entlang einer Achse führen, die nicht die Längsachse schneidet, sondern tangential oder sekantial ausgerichtet ist. Die Bewegung des mindestens einen Vortriebelements kann auch in eine Schwenkbewegung um eine feste Drehachse oder um Momentanpole umgelenkt werden, die in einer bevorzugten Weiterbildung entlang einer L-förmigen Kurve angeordnet sind, wobei die L-förmige Kurve näherungsweise dem Verlauf einer Spirale entspricht und die einen Ursprung in der Längsachse aufweisen kann. Die Bewegung des mindestens einen Vortriebzahns kann in einer solchen Ausgestaltung des Führungsmittels zunächst als eine näherungsweise rein radiale Bewegung beschrieben werden, welche mit zunehmenden Hub in eine Tangentialrichtung umgelenkt wird.

Gemäß einer weiteren Ausgestaltung der vorliegenden Erfindung ist die Zahnstange in einer zweiten Ebene angeordnet, die parallel und beabstandet zu einer ersten Ebene angeordnet ist, welche in der Längsachse liegt. Die zweite Ebene ist folglich derart angeordnet, dass diese nicht die Längsachse schneidet, sondern bevorzugt auf einer Tangente eines beliebigen Kreises angeordnet ist, der in einer Ebene senkrecht zu der Längsachse liegt und dessen Mittelpunkt die Längsachse bildet. Die Ausrichtung der mindestens einen Zahnstange in der zweiten Ebene, dass die Zähne der Zahnstange in der Ebene liegen, oder mit anderen Worten beschrieben, dass sowohl die Zahnspitzen als auch die Zahnfüße in der zweiten Ebene liegen. Beim Eindrücken des Vortriebzahns des mindestens einen Vortriebelements resultiert eine Querkraft bzw. Tangentialkraft, welche zumindest teilweise, vorzugsweise vollständig durch das Führungsmittel aufgenommen werden kann.

Weiterhin hat es sich als vorteilhaft erwiesen, wenn der mindestens eine Vortriebzahn in ein Zahnstangengehäuse ragt. Das Zahnstangengehäuse kann U-förmig ausgebildet sein und nimmt die Zahnstange auf. Gemäß einer bevorzugten Ausgestaltung der vorliegenden Erfindung kann das Zahnstangengehäuse modular aufgebaut sein, wodurch die Länge des Zahnstangengehäuses durch die Aneinanderreihung in der Längsachse einer Mehrzahl von Zahnstangengehäuseabschnitten beliebig vergrößert eingestellt werden kann. Insbesondere ist es bevorzugt, wenn mehrere Zahnstangengehäuseabschnitte nach Art eines Stecksystems und/oder durch Verbindungsmittel miteinander verbunden werden können.

Darüber hinaus hat es sich als vorteilhaft erwiesen, wenn der mindestens eine Vortriebzahn in eine Aussparung des Zahnstangengehäuses ragt, und dass die Zahnstange auf einer ersten Seite in der Aussparung angeordnet ist und dass das mindestens eine Führungsmittel, bevorzugt die Kulisse, auf der zweiten, gegenüberliegenden Seite angeordnet ist. Beim Eintauchen des mindestens einen Vortriebzahns in die Aussparung erzwingt das mindestens eine Führungsmittel eine Relativbewegung in Richtung der Zahnstange und der mindestens eine Vortriebzahn taucht in die Zahnstange ein. Für die daraus resultierenden Querkräfte bzw. Radialkräfte bildet die Kulisse das Widerlager. Diese Querkräfte bzw. Radialkräfte verbleiben somit innerhalb des Zahnstangengehäuses und es wirkt kein Drehmoment auf das Vortriebelement. Beim Eintauchen in die Aussparung des Zahnstangengehäuses wird der mindestens eine Vortriebzahn in einen Formschluss zwischen dem mindestens einen Führungsmittel und der Zahnstange gedrückt.

Eine weitere bevorzugte Ausgestaltung der vorliegenden Erfindung sieht vor, dass die Kulisse keil- und/oder bogenförmig ausgebildet ist bzw. dass die Umlenkung des Vortriebzahns während der Hubbewegung durch die Kulisse linear oder nicht-linear erfolgt. Durch die Ausgestaltung der Kulisse kann die Bewegungscharakteristik des mindestens einen Vortriebzahns in der Tangentialrichtung maßgeblich beeinflusst werden, wobei eine keilförmige Kulisse den mindestens einen Vortriebzahn konstant in die Tangentialrichtung umlenkt. Eine bogenförmige Kulisse kann gemäß einer bevorzugten Ausgestaltung verwendet werden, um eine möglichst lineare Bewegung des mindestens einen Vortriebzahns in Richtung der Zahnstange beim Eindrücken in die Zahnstange und/oder Ausdrücken aus der Zahnstange zu bewerkstelligen.

Eine Weiterbildung der vorliegenden Erfindung sieht vor, dass die Antriebswelle eine Nockenwelle mit mindestens einer Nockenwellenscheibe umfasst, und dass die Nockenwellenscheibe trieblich mit dem mindestens Vortriebelement gekoppelt ist. Die mindestens eine Nockenwellenscheibe gibt die zyklische Hubbewegung des mindestens einen Vortriebzahns vor, wobei die betriebliche Kopplung bevorzugt durch einen Reibkontakt zwischen einer Gleitfläche der Nockenwellenscheibe und dem mindestens einen Vortriebzahn erfolgt. Die mindestens eine Nockenwellenscheibe kann beispielsweise als Exzenterscheibe ausgebildet sein oder eine Form aufweisen, die dafür optimiert ist, zwischen den beiden Maxima eine möglichst lineare Hubbewegung des mindestens einen Vortriebzahns in Richtung der Zahnstange zu erzeugen.

Eine bevorzugte Ausgestaltung der vorliegenden Erfindung sieht vor, dass die Ausnehmung das Vortriebelement durchbricht. Demnach erstreckt sich die Ausnehmung vollständig durch das Vortriebelement, wobei die Ausnehmung entweder als Durchgangsloch, bzw. als Durchbrechung ausgebildet sein kann oder als eine nach außen offene Nut. Die Ausnehmung bildet vorzugsweise zwei Seitenflächen aus, die ausgebildet sind, einen Gleitkontakt mit einer der mindestens einen Nockenwellenscheibe herzustellen. Bevorzugt ist die Ausnehmung in einem ersten Endbereich des Vortriebelements angeordnet, währenddessen am gegenüberliegenden Endbereich der mindestens eine Vortriebzahn angeordnet ist.

Eine weitere bevorzugte Ausgestaltung der vorliegenden Erfindung sieht vor, dass die Nockenwelle das mindestens eine Vortriebelement in der Ausnehmung durchdringt. Mit anderen Worten ist die Nockenwelle in der Längsachse durch die Ausnehmung hindurchgesteckt, wobei bevorzugt das Vortriebelement quer zu der Längsachse ausgerichtet ist. Es ist vorteilhaft, wenn die Nockenwelle zumindest mit einer der Seitenflächen der Ausnehmung kontaktiert und eine triebliche Kopplung zwischen der Nockenwelle und dem mindestens einem Vortriebelement bildet.

Eine weitere vorteilhafte Ausgestaltung der vorliegenden Erfindung sieht vor, dass die Nockenwellenscheibe um die Längsachse asymmetrisch ausgebildet ist, wobei weiterhin bevorzugt die Nockenwellenscheibe um eine Symmetrieebene in der Längsachse spiegelsymmetrisch ausgebildet sein kann.

Darüber hinaus hat es sich als besonders vorteilhaft erwiesen, wenn die mindestens eine Nockenwellenscheibe derart ausgestaltet ist, dass der mindestens eine Vortriebzahn bei einer Drehung der Antriebswelle mit einer konstanten Winkelgeschwindigkeit um die Längsachse im Wesentlichen mit einer konstanten Geschwindigkeit in die Zahnstange eingedrückt und ausgedrückt wird. In diesem Zusammenhang wird unter einer im Wesentlichen konstanten Geschwindigkeit des mindestens einen Vortriebzahns eine näherungsweise konstante Geschwindigkeit zwischen den beiden Wendepunkten bzw. Maxima verstanden, an dem das mindestens eine Vortriebelement entweder in die Zahnstange eingedrückt ist oder aus der Zahnstange ausgedrückt ist. Zwischen den beiden Wendepunkten, vorzugsweise mehr als 80 %, vorzugsweise mehr als 90 % des Hubes, sollte die Geschwindigkeit in einer Toleranz von ±10 %, weiter bevorzugt ±5 % um einen Mittelwert liegen. An den Wendepunkten wird das Vortriebelement entsprechend verzögert und anschließend wieder beschleunigt. Eine derartige Bewegung kann in einem X-Y-Diagramm als Zickzack beschrieben werden, wobei in der X-Achse der Hub aufgelöst ist und in der Y-Achse der Umlaufwinkel. In dieser Ausgestaltung wird der mindestens eine Vortriebzahn ein einziges Mal während einer vollständigen Umdrehung (=360°) der Antriebswelle zur Erzeugung des Vorschubs in die Zahnstange eingedrückt und wieder ausgedrückt.

Nach Maßgabe einer Weiterbildung des zuvor beschriebenen Linearantriebs kann es vorteilhaft sein, wenn die Antriebswelle eine Kurbelwelle umfasst. Der mindestens eine Vortriebzahn kann mittelbar oder unmittelbar trieblich mit der als Kurbelwelle zumindest bereichsweise ausgebildeten Antriebswelle gekoppelt sein, wobei vorzugsweise der mindestens eine Vortriebzahn über eine Pleuelstange mit der Antriebswelle gekoppelt ist. Die Antriebswelle kann eine Kombination zwischen der bereits beschriebenen Nockenwelle und der Kurbelwelle sein.

Weiterhin hat es sich als vorteilhaft erwiesen, wenn das mindestens eine Vortriebelement durch das mindestens eine Führungsmittel in Richtung der Zahnstange derart umgelenkt wird, dass eine auf die Zahnstange gerichtete Bewegung zwischen den Maxima möglichst konstant ist. In dieser Ausgestaltung kann es vorteilhaft sein, wenn die Kulisse eine bogenförmige Führung vorsieht.

Nach Maßgabe einer Weiterbildung der vorliegenden Erfindung sind mindestens zwei Vortriebelemente mit jeweils mindestens einem Vortriebzahn vorgesehen, die in der Längsachse parallel und beabstandet angeordnet sind. Der jeweiligen Nockenwellenscheibe oder Pleuelstange ist somit jeweils ein Vortriebelement zugeordnet, wobei eine Auslenkung des jeweiligen Vortriebzahns von der Winkellage der jeweiligen Nockenwellenscheibe bzw. der Kurbelwelle abhängt.

Gemäß einer Weiterbildung der vorliegenden Erfindung hat es sich als vorteilhaft erwiesen, wenn die Bewegung der mindestens zwei Vortriebelemente um die Längsachse in einem Winkel phasenversetzt erfolgt. Die Auslenkung des jeweiligen Vortriebelements während einer Drehung der Antriebswelle erfolgt somit bei gleichbleibender Drehgeschwindigkeit der Antriebswelle zeitlich versetzt. Hier und im Nachfolgenden wird unter einem Phasenversatz ein Ein- und Austauchen der wenigstens zwei Vortriebelemente in die Zahnstange zu unterschiedlichen Drehwinkeln der Antriebswelle verstanden.

Der Phasenversatz kann beispielsweise durch einen Winkelversatz um die Längsachse zwischen den Nockenwellenscheiben oder der Kurbelabschnitte der Kurbelwelle erfolgen.

Gemäß einer vorteilhaften Ausgestaltung des erfindungsgemäßen Linearantriebs kann vorgesehen sein, dass der Phasenversatz $\Delta\varphi$ der zyklischen Bewegung der mindestens zwei Vortriebelemente in Bezug auf eine Umdrehung der Antriebswelle mindestens 1/256, weiter bevorzugt mindestens 1/128, 1/64, 1/32, 1/16 oder 1/8 und bevorzugt kleiner oder gleich ½ beträgt. Bevorzugt beträgt der Phasenversatz $\Delta\varphi$ weniger als 1/2, insbesondere ⅓ oder 1/4 Umdrehungen. Der Phasenversatz $\Delta\varphi$ zwischen zwei benachbarten Vortriebelementen kann in Bezug auf eine Umdrehung der Antriebswelle zwischen $0 \leq \Delta\varphi \leq 1$ betragen, vorzugsweise $0 < \Delta\varphi < 1$. Der Phasenversatz $\Delta\varphi$ zwischen mindestens zwei benachbarten Vortriebelementen kann vorzugsweise $\Delta\varphi$ = 0,2 bzw. 72° oder $\Delta\varphi$ = 0,4 bzw. 144° betragen. Der Winkel $\alpha$ zwischen den beiden benachbarten Nockenwellenscheiben kann somit ebenfalls 72° oder 144° betragen.

Es kann vorteilhaft sein, wenn der mathematische Kehrwert des jeweiligen Bruchteils (1/n) des Phasenversatzes die Mindestanzahl k der vorzusehenden Vortriebelemente vorgibt, nämlich k = (n/i)-1, wobei eine Anzahl i die Anzahl der zyklischen Bewegung eines Vortriebelements bei einer Umdrehung $\varphi$ der Antriebswelle ist. Beispielsweise sind bevorzugt wenigstens 2 Vortriebelemente vorzusehen, wenn der Phasenversatz zwischen den Vortriebelementen ⅓ $\varphi$ beträgt und das Vortriebelement pro Umdrehung eine vollständige zyklische Bewegung vollzieht.

Gemäß einer vorteilhaften Ausgestaltung der vorliegenden Erfindung sind die mindestens zwei Vortriebzähne der mindestens zwei Vortriebelemente in einem ersten Abstand in der Längsachse angeordnet und die Zähne der Zahnstange in einem zweiten Abstand entlang der Längsachse angeordnet, wobei der erste Abstand kleiner als der zweite Abstand ist oder der zweite Abstand kleiner als der erste Abstand ist. Mit anderen Worten, die ersten Abstände zwischen den Vortriebzähnen unterschiedlicher Vortriebelemente und die zweiten Abstände zwischen den Zähnen der Zahnstange müssen ungleich sein.

Der erste Abstand und der zweite Abstand sind jeweils auf die geometrische Mitte des jeweiligen Vortriebzahns bzw. des Zahns der Zahnstange bzw. der Zahnspitze bezogen und werden parallel zu der Längsachse gemessen. Durch die unterschiedliche Bemessung des ersten Abstandes und des zweiten Abstandes wird erreicht, dass während einer zyklischen Bewegung der wenigstens zwei Vortriebzähne mit einem Phasenversatz die jeweiligen Vortriebzähne in unterschiedlichen Relativpositionen zu den Zähnen der Zahnstange positioniert sind.

Es hat sich weiterhin als vorteilhaft erwiesen, wenn der jeweilige Vortriebzahn und/oder der Zahn der Zahnstange rechteckig, dreieckig, evolventen- oder sinusförmig ausgebildet sind bzw. ausgebildet ist. Bevorzugt wird eine dreieckige oder sinusförmige Zahnform. Weiterhin bevorzugt sind die Zähne der Zahnstange und/oder die Vortriebzähne parallel zu der Längsachse äquidistant angeordnet. Für den Fall, dass mehr als zwei Vortriebzähne vorgesehen sind, ist es ebenfalls bevorzugt, wenn diese Vortriebzähne parallel zu der Längsachse in wenigstens einer Reihe in einem äquidistanten Abstand angeordnet sind.

Auch hat es sich als vorteilhaft erwiesen, wenn der jeweilige Vortriebzahn und/oder die Zähne der Zahnstange symmetrisch ausgebildet sind. Durch eine symmetrische Ausbildung des jeweiligen Vortriebzahns und/oder des Zahns der Zahnstange können unter der Maßgabe einer gleichbleibenden Drehzahl der Antriebswelle gleiche Verstellgeschwindigkeiten in beide Vortriebrichtungen entlang der Längsachse realisiert werden.

Nach Maßgabe einer weiteren bevorzugten Ausgestaltung der vorliegenden Erfindung weist der jeweilige Vortriebzahn eine grö-βere, eine gleiche oder eine kleinere Zahnlänge und/oder eine größere Zahnhöhe als der jeweilige Zahn der Zahnstange auf. Durch eine Vergrößerung der Zahnhöhe und der Zahnlänge der Zähne der Zahnstange wird die Auflagefläche der Vortriebzähne auf den Zahnflanken bzw. der Reibfläche auf den Zahnflanken erhöht, wodurch eine gleichmäßigere Kraftübertragung zwischen der Zahnstange und den Vortriebzähnen bewerkstelligt werden kann. Ebenfalls ist es möglich, dass die Zahnhöhe und die Zahnlänge der Vortriebzähne größer ist als die Zahnhöhe und die Zahnlänge der Zähne der Zahnstange, wodurch eine höhere Überdeckung erzeugt werden kann und höhere maximale Belastungen erreicht werden können und die Laufruhe der Antriebsvorrichtung verbessert werden kann. Demzufolge können durch die Wahl der Größenverhältnisse zwischen den Vortriebzähnen und den Zähnen der Zahnstange maximale Belastungen und unterschiedliche Laufeigenschaften eingestellt werden. Für den Fall, dass die Zahnlänge und die Zahnhöhe der Vortriebzähne kleiner ist als die Zahnlänge und die Zahnhöhe der Zähne der Zahnstange, kann in einen Zahnzwischenraum zwischen zwei Zähnen der Zahnstange auch mehr als ein Vortriebzahn gleichzeitig ein- bzw. austauchen.

Weiterhin hat es sich als vorteilhaft erwiesen, wenn die wenigstens zwei Vortriebzähne und die Zähne der Zahnstange eine korrespondierende Zahnform aufweisen. Unter einer korrespondierenden Zahnform ist zu verstehen, dass der jeweilige Vortriebzahn beim vollständigen Eintauchen in den Zahnzwischenraum zwischen zwei Zähne der Zahnstange mit seiner den Zähnen der Zahnstange zugewandten Reibfläche flächig an zumindest einer der Reibflächen der Zähne der Zahnstange anliegen kann. Insbesondere hat es sich als vorteilhaft erwiesen, wenn sowohl der jeweilige Vortriebzahn als auch der mindestens eine Zahn der Zahnstange gleiche Zahnflankenwinkel aufweisen. In diesem Zusammenhang wird angemerkt, dass die Reibfläche der jeweiligen Zahnflanken nicht zwangsweise einer Ebene entsprechen muss, sondern ebenfalls als eine - bevorzugt nach außen - gewölbte Fläche ausgebildet sein kann.

Darüber hinaus hat es sich als vorteilhaft erwiesen, wenn die mindestens zwei Vortriebelemente in einer Reihe entlang einer Achse parallel zu der Längsachse angeordnet sind. Ebenfalls ist es bevorzugt, wenn die Zahnstange eine Vielzahl von Zähnen aufweist, die in einer zweiten Reihe in der zweiten Ebene und in einer Achse parallel zu der Längsachse angeordnet sind.

Gemäß einer weiteren vorteilhaften Ausgestaltung des vorliegenden erfindungsgemäßen Linearantriebs ist ein Schlitten vorgesehen, in dem das mindestens eine Vortriebelement und die Antriebswelle gelagert angeordnet sind. Bevorzugt wird das mindestens eine Vortriebelement in einer Ebene senkrecht zur Längsachse nach Art eines Gleitlagers gehalten, wodurch der durch den mindestens einen Vortriebzahn erzeugte Vortrieb auf den Schlitten übertragen werden kann. Der Schlitten kann ein- oder mehrteilig ausgebildet sein und Mittel aufweisen, durch die er linearbeweglich zu der wenigstens einen Zahnstange bzw. dem Zahnstangengehäuse gehalten wird. Insbesondere ist es bevorzugt, wenn der Schlitten durch geeignete Mittel leichtgängig auf dem Zahnstangengehäuse abgestützt gehalten ist.

Eine Weiterbildung des Linearantriebs sieht vor, dass ein Antrieb vorgesehen ist. Bevorzugt ist der Antrieb ein elektrischer Motor, durch den die Antriebswelle angetrieben werden kann.

Weiterhin ist es vorteilhaft, wenn zwischen dem Antrieb und der Antriebswelle ein Getriebe angeordnet ist, wobei besonders bevorzugt zwischen dem Antrieb und der Antriebswelle ein Planetengetriebe angeordnet sein kann.

Der Antrieb und/oder das Getriebe können bzw. kann gemäß einer Ausgestaltung des Linearantriebs in dem Schlitten angeordnet sein. Die Versorgung des Antriebs in dem Schlitten mit Energie und/oder mit Steuersignalen kann über eine Schleppkette mit entsprechenden elektrischen Leitungen erfolgen.

Darüber hinaus bezieht sich die vorliegende Erfindung auf eine Längsverstelleinheit mit einem erfindungsgemäßen Linearantrieb.

Ein weiterer Aspekt der vorliegenden Erfindung betrifft ein Kraftfahrzeug mit wenigstens einem solchen erfindungsgemäßen Linearantrieb.

Nachfolgend wird unter Bezugnahme auf die begleitenden Zeichnungen ein erfindungsgemäßes Ausführungsbeispiel sowie Weiterbildungen der vorliegenden Erfindung im Detail beschrieben. Es zeigen:

Figur 1      eine perspektivische Darstellung eines erfindungsgemäßen Linearantriebs, aufweisend einen auf einem Zahnstangengehäuse angeordneten Schlitten mit mindestens einem Vortriebzahn, welcher trieblich mit einer Antriebswelle gekoppelt ist und bei einer Umdrehung der Antriebswelle in einer zyklischen Bewegung zum Erzeugen eines Vortriebs in wenigstens eine in einer Ausnehmung eines Zahnstangengehäuses angeordnete Zahnstange eingedrückt werden kann,

Figur 2      eine vereinfachte perspektivische Darstellung des erfindungsgemäßen Linearantriebs gemäß Figur 1,

Figur 3      eine vereinfachte Vorderansicht des Linearantriebs gemäß Figur 1, wobei die Komponenten in dem Schlitten ersichtlich sind,

Figur 4      eine vereinfachte Rückseitenansicht des Linearantriebs gemäß Figur 1,

Figur 5      eine Detailansicht des Vortriebzahns gemäß den Figuren 1 bis 4, der über eine Nockenwellenscheibe mit der Antriebswelle gekoppelt ist,

Figur 6      eine Detailansicht eines Vortriebzahns gemäß einer ersten Weiterbildung,

Figur 7      eine Detailansicht eines Vortriebzahns gemäß einer zweiten Weiterbildung, und

Figur 8a-d    vereinfachte und teilweise geschnittene Darstellungen eines Zahnstangengehäuseabschnitts.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

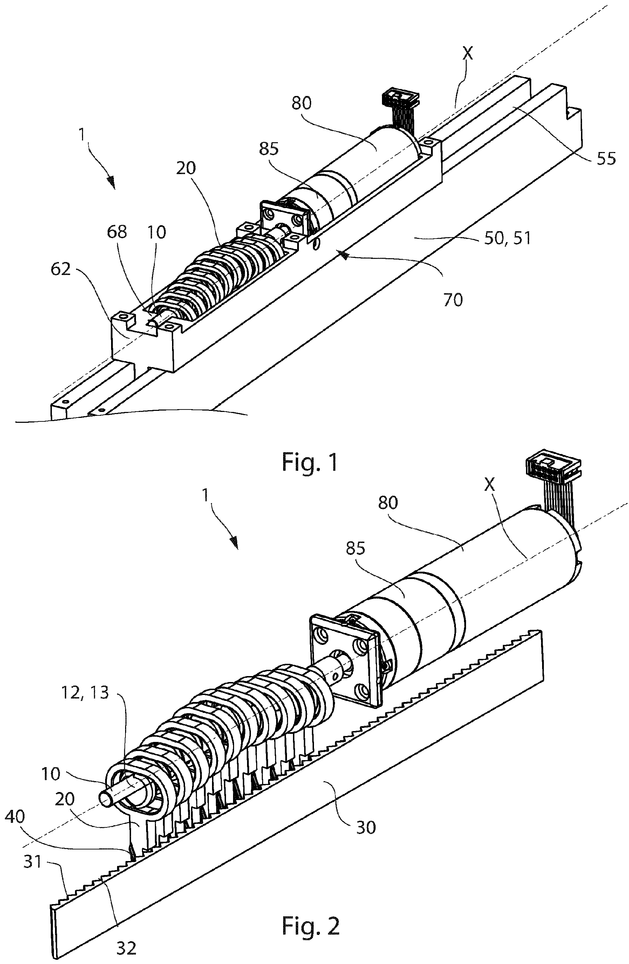

Figur 1 zeigt eine vereinfachte perspektivische Ansicht eines erfindungsgemäßen Linearantriebs 1, aufweisend ein Zahnstangengehäuse 50 und einen Schlitten 70, der entlang einer Längsachse X auf oder über dem Zahnstangengehäuse 50 beweglich gelagert gehalten ist. Der Linearantrieb 1 kann in einer (nicht dargestellten) Längsverstelleinheit zum Verstellen eines (nicht dargestellten) Sitzes in einem (nicht dargestellten) Kraftfahrzeug verwendet werden, wobei das Zahnstangengehäuse 50 fest in einen Fahrzeugboden eingelassen sein kann und der Schlitten 70 mit dem Sitz und/oder einer Sitzreihe gekoppelt sein kann.

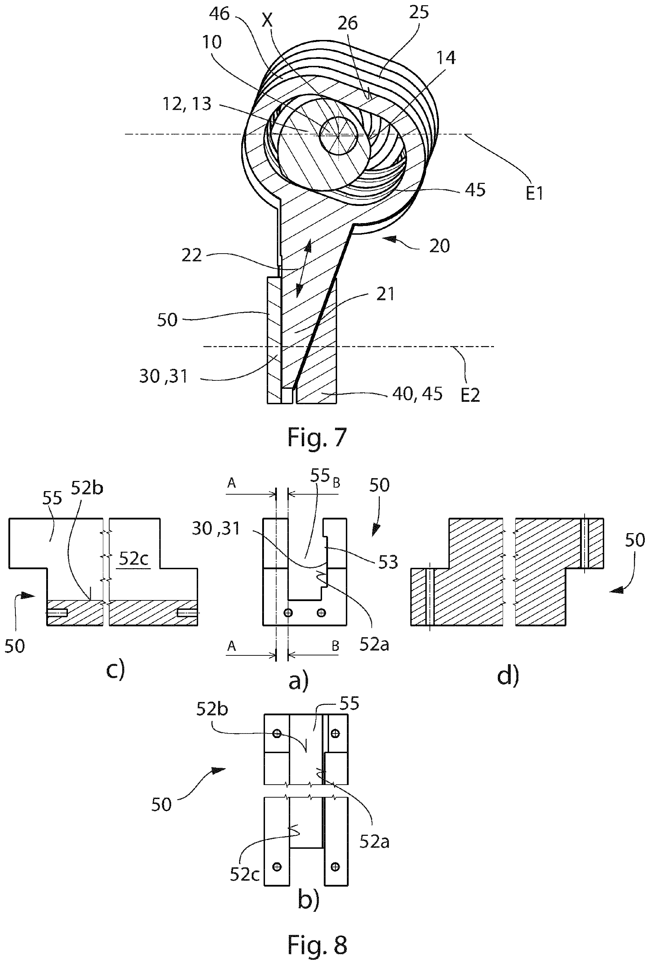

Das Zahnstangengehäuse 50, welches detailliert in den Figuren 8a-8d dargestellt ist, kann ein modulares System sein, dass aus einem oder mehreren Zahnstangengehäuseabschnitten 51 gebildet werden kann, wodurch der Verfahrweg des Schlittens 70 auf dem Zahnstangengehäuse 50 anwendungsspezifisch und theoretisch unendlich lang konfiguriert werden kann.

Das Zahnstangengehäuse 50 kann, wie im dargestellten Ausführungsbeispiel, quaderförmig ausgebildet sein und eine Aussparung 55 aufweisen, die von der dem Schlitten 70 zugewandten Seite offen und somit zugänglich ausgestaltet ist.

In der Aussparung 55 ist, wie der Figur 2 zu entnehmen ist, eine Zahnstange 30 angeordnet, die aus einer Vielzahl von Zähnen 31 gebildet ist, die bevorzugt äquidistant entlang einer Achse parallel zu der Längsachse X angeordnet sind. Zwischen jeweils zwei Zähnen 31 wird ein entsprechender Zahnzwischenraum 32 ausgebildet.

Die Zahnstange 30 ist innerhalb der Aussparung 55 einer zweiten Ebene E2 angeordnet, die parallel und beabstandet zu einer ersten Ebene E1 ist, die in der Längsachse X liegt. Die Zähne 31 der Zahnstange 30 weisen in Richtung der zweiten Ebene E2, wonach sowohl der Zahnfuß als auch die Zahnspitze in der zweiten Ebene E2 angeordnet sind.

Das Zahnstangengehäuse 50 kann derart ausgestaltet sein, dass es in der Längsachse X in einem ersten Endbereich und in einem zweiten Endbereich in der Aussparung 55 jeweils einen Anschlag bildet, durch den der maximale Verfahrweg des Schlittens 70 auf dem Zahnstangengehäuse 50 vorgegeben wird.

Die Zähne 31 der Zahnstange 30 sind identisch und weisen eine Zahnhöhe H2, eine Zahnlänge L2 und einen Zahnflankenwinkel $\gamma2$ auf. Die Zähne 31 sind in einem zweiten Abstand A2 angeordnet, wobei der jeweilige zweite Abstand A2, wie in Figur 2 dargestellt ist, jeweils bezogen auf die geometrische Mitte des jeweiligen Zahns 31 gemessen wird. Bei symmetrischen ähnen 31 ist typischerweise eine Zahnspitze in der geometrischen Mitte ausgebildet, von der sich zwei symmetrische Zahnflanken als Reibflächen 33 erstrecken. In dem dargestellten Ausführungsbeispiel schließen die beiden Flanken einen Winkel von ca. 135° ein, wobei die Flanken bevorzugt einen Winkel von kleiner oder gleich 180° und größer als 30° einschließen.

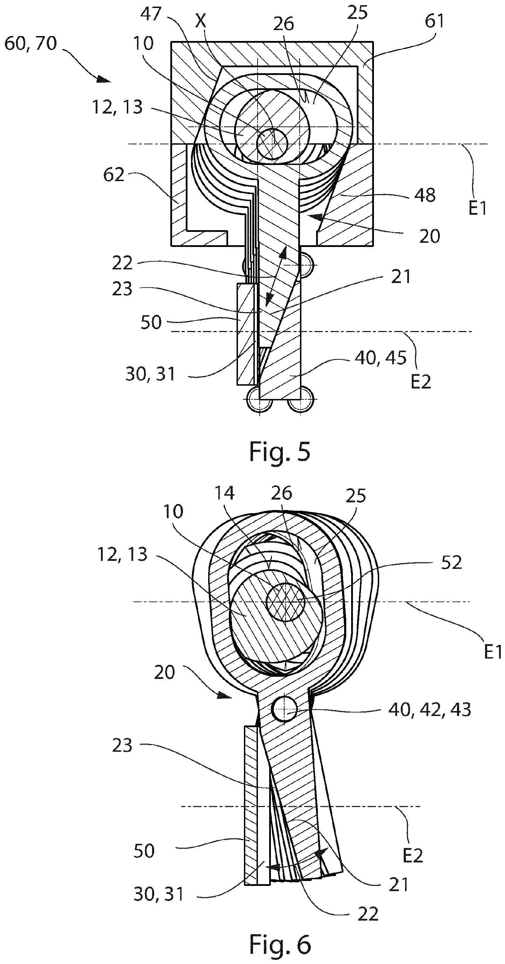

Der Schlitten 70 kann, wie in Figur 1 oder 5 dargestellt ist, ein zweiteiliges Gehäuse 60 aus einem ersten Gehäuseteil 61 und einem zweiten Gehäuseteil 62 aufweisen. Das Gehäuse 60 weist einen ersten Endbereich und einen zweiten Endbereich auf, die als Endanschlag mit dem Zahnstangengehäuse 50 zusammenwirken können.

Unter Bezugnahme wieder auf Figur 1 ist ersichtlich, dass in dem Gehäuse 60 des Schlittens 70 eine Antriebswelle 10 koaxial zu der Längsachse X angeordnet ist, die mittels Lager 68 in der Längsachse X drehbar gelagert gehalten ist. Die Antriebswelle 10 kann mittels eines Getriebes 85 mit einem Antrieb 80 gekoppelt sein, wodurch die Antriebswelle 10 durch den Antrieb 80 in eine Drehbewegung um die Längsachse X versetzt werden kann.

Der Antrieb 80 kann bevorzugt ein elektrischer Antrieb sein und weiterhin bevorzugt mit dem als Planetengetriebe ausgebildeten Getriebe 85 mit der Antriebswelle 10 gekoppelt sein. Das Getriebe 85 kann eine Drehzahl des Antriebs 80 in eine Drehzahl der Antriebswelle 10 über- oder untersetzen.

Die Antriebswelle 10 kann gemäß dem dargestellten Ausführungsbeispiel zumindest abschnittsweise als Nockenwelle 12 ausgebildet sein und Nockenwellenscheiben 13 aufweisen, die zwischen den beiden Lagern 68 zueinander beabstandet angeordnet sind. Die Nockenwellenscheiben 13 sind jeweils in einer Ebene quer zu der Längsachse X angeordnet.

Die Nockenwellenscheiben 13 sind entlang der Längsachse X jeweils zueinander in einem Winkel $\alpha$ verdreht angeordnet, wobei im vorliegenden Ausführungsbeispiel die zehn Nockenwellenscheiben 13 um die Längsachse X um jeweils den Winkel $\alpha = 22{,}5°$ verdreht angeordnet sind.

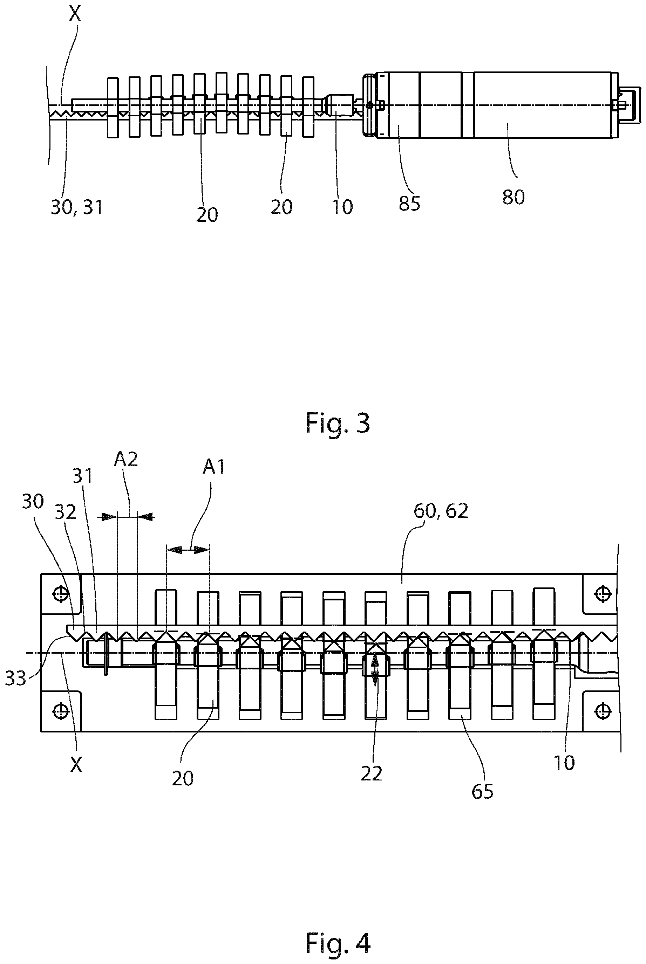

Weiter in Bezug auf Figur 4 ist ersichtlich, dass in dem Gehäuse 60 jeweils mehrere Führungsausnehmungen 65 angeordnet sind, welche quer zur Längsachse X in einer Radialrichtung R zu der Antriebswelle 10 angeordnet sind und auf die Aussparung 55 des Zahnstangengehäuses 50 gerichtet sind.

In der jeweiligen Führungsausnehmung 65 ist ein Vortriebselement 20 mit einem Vortriebzahn 21 angeordnet, der in der Führungsausnehmung 65 beweglich ist und - wie mit dem Doppelpfeil gekennzeichnet - eine Bewegung 22 vornehmen kann, welche derart ausgeprägt ist, dass der Vortriebzahn 21 in die Zahnstange 30 innerhalb der Aussparung 55 eingedrückt wird - wie später unter Bezugnahme auf die Figuren 5, 6 und 7 beschrieben werden wird.

Weiter unter Bezugnahme auf die Figuren 2, 5, 6 und 7 ist zu entnehmen, dass das jeweilige Vortriebelement 20 eine Ausnehmung 25 aufweist, die jeweils eine Nockenwellenscheibe 13 aufnehmen kann. Die Ausnehmung 25 durchbricht das Vortriebelement 20 vollständig nach Art einer Durchgangsöffnung oder Durchbrechung.

Das Vortriebelement 20 ist I-förmig mit einem ersten Endabschnitt und einem zweiten Endabschnitt ausgebildet, wobei in dem ersten Endabschnitt die Ausnehmung 25 angeordnet ist und in dem zweiten Endabschnitt ein Vortriebzahn 21 angeordnet ist. Der jeweilige Vortriebzahn 21 weist eine Höhe H1, eine Zahnlänge L1 und einen Zahnflankenwinkel $\gamma1$ auf.

Die triebliche Kopplung zwischen der Nockenwelle 12 und dem Vortriebelement 20 erfolgt innerhalb der Ausnehmung 25 durch einen Wirkkontakt zwischen einer Reibfläche 14 der Nockenwellenscheibe 13 und den Innenflächen 26 der Ausnehmung 25, was insbesondere in den Schnittdarstellungen gemäß den Figuren 5 - 7 gezeigt ist. Durch die Kopplung zwischen der Antriebswelle 10 und dem jeweiligen Vortriebelement 20 kann das Vortriebelement 20 in die Zahnstange 30 eingedrückt und wieder ausgedrückt werden, ohne dass hierfür gesonderte Rückstellmittel vorgesehen werden müssen. Zum Eindrücken erfolgt ein Krafteintrag der Nockenwellenscheibe 13 auf einer der Innenflächen 26 und zum Ausdrücken erfolgt ein Krafteintrag der Nockenwellenscheibe 13 auf der gegenüberliegenden Innenfläche 26. Der jeweilige Vortriebzahn 21 des Vortriebelements 20 kann innerhalb einer zyklischen Bewegung einmal in die Zahnstange 30 bzw. einen Zahnzwischenraum 32 eingedrückt werden und vollständig austauchen und in die Ausgangslage zurückkehren.

In einer Reihe parallel zu der Längsachse X sind entlang der Antriebswelle 10 zehn Vortriebzähne 21 in einem Abstand A1 angeordnet, wobei der Abstand A1 auf die geometrische Mitte der Vortriebzähne 21 bezogen ist. Entsprechend kann jedem Vortriebzahn 21 eine Nockenwellenscheibe zugeordnet sein.

Die Führungsausnehmung 65 bildet für das jeweilige Vortriebelement 20 ein Axiallager, wodurch das Vortriebelement 20 leichtgängig beweglich gelagert ist und durch die Führungsausnehmung 65 hindurch in die Aussparung 55 des Zahnstangengehäuses 50 ragen kann und dort innerhalb der Aussparung 55 in einen der Zahnzwischenräume 32 der Zahnstange 30 ein- und ausgedrückt werden kann.

Der jeweilige Vortriebzahn 21 kann bevorzugt an die Form der Zähne 31 der Zahnstange 30 angepasst sein, wodurch die Zahnflanken des Vortriebzahns 21 im vollständig in den Zahnzwischenraum 32 eingetauchten Zustand des Vortriebzahns 21 flächig an den Flanken der Zähne 31 anliegen. Eine Zahnlänge L1 des jeweiligen Vortriebzahns 21 kann dem Abstand A2 zwischen zwei Zähnen 31 entsprechen. Es ist jedoch wesentlich, dass ein Abstand A1 zwischen zwei Vortriebzähnen 21 größer oder kleiner ist als der Abstand A2 zwischen zwei Zähnen 31. Somit ist A2 < A1 oder bevorzugt A1 > A2. Mit anderen Worten muss A1 ≠ A2 sein.

Durch die um die Längsachse X im Winkel $\alpha$ zueinander verdrehten Nockenwellenscheiben 13 erfolgt die zyklische Bewegung der jeweiligen Vortriebelemente 20 phasenversetzt, wodurch die Vortriebelemente 20 in unterschiedlichen Drehwinkeln der Antriebswelle 10 in die Zahnstange 30 bzw. einen der Zahnzwischenräume 32 ein- und ausgedrückt werden bzw. ein- und austauchen.

Die Funktionsweise des Linearantriebs 1 beruht auf der Tatsache, dass das jeweilige Vortriebelement 20 in die Aussparung 55 ragt und innerhalb der Aussparung 55 durch ein Führungsmittel 40 geführt in die Zahnstange 30 in einer Radialrichtung eintauchen kann. Das Führungsmittel 40 bildet eine Zwangsführung für das jeweilige Vortriebelement 20 und wirkt als Widerlager, das entgegen der Zahnstange 30 wirkt und Kräfte von dem mindestens einen Vortriebelement 20 in Richtung der zweiten Ebene E2 aufnimmt.

Beim Eintauchen des jeweiligen Vortriebzahns 21 kommt eine erste Flanke bzw. eine der Reibflächen 23 in Kontakt mit der Flanke bzw. der Reibfläche 33 eines der Zähne 31. Die beiden Reibflächen 23, 33 erzeugen aufgrund der keilförmigen Ausgestaltung einen in der Längsachse X gerichteten Vortrieb, durch den der Schlitten 70 entlang der Längsachse X in dem Raum verschoben wird. Sobald einer der Vortriebzähne 21 des Vortriebelements 20 vollständig in die Zahnstange 30 eingetaucht ist, folgt phasenversetzt ein weiterer Vortriebzahn 21, der versetzt zu der Mitte eines weiteren Zahnzwischenraums 32 angeordnet ist. Der weitere Vortriebzahn 21 eines weiteren Vortriebelements 20 taucht in einen weiteren Zahnzwischenraum 32 unter Erzeugung eines Vortriebs ein. Derweilen wird der zuerst vollständig in den Zahnzwischenraum 32 eingetauchte Vortriebzahn 21 durch die kontaktierenden Reibflächen 23, 33 aus dem Zahnzwischenraum 32 ausgedrückt und der auf der gegenüberliegenden Seite des jeweiligen Vortriebelements 20 angeordnete Vortriebzahn 21 wird zeitgleich in einen gegenüberliegenden Zahnzwischenraum 32 der gegenüberliegenden Zahnstange 30 eingedrückt. Weitere Vortriebzähne 21 können versetzt oder zeitgleich folgen, wodurch ein weiterer Vortrieb erzeugt werden kann.

Wie den vergrößerten Darstellungen gemäß den Figuren 5 bis 7 zu entnehmen ist, weist die Nockenwellenscheibe 13 eine spezielle Formgebung auf, durch die eine möglichst lineare bzw. konstante Bewegung des jeweiligen Vortriebselementes 20 erzeugt werden kann. Konkreter ist die Nockenwellenscheibe 13 in dem dargestellten Ausführungsbeispiel näherungsweise herzförmig ausgebildet und weist einen ersten Abschnitt und einen zweiten Abschnitt auf, die sich jeweils über einen Halbkreis erstrecken. Der erste Abschnitt und der zweite Abschnitt sind spiegelsymmetrisch ausgebildet und weisen näherungsweise den Verlauf einer Spirale auf. Der spiralförmige Verlauf des jeweiligen Abschnitts ist dabei derart gewählt, dass sich in einer Umlaufrichtung mit zunehmenden Umlaufwinkel $\phi$ die Änderung des Radius r, also der Abstand zwischen der Längsachse X und der Reibfläche 14 näherungsweise konstant ändert, also $\Delta\phi \approx |\Delta r|$. Im ersten Abschnitt steigt somit der Radius r linear an. In diesem Abschnitt gilt näherungsweise $\Delta\phi \approx \Delta r$. Im zweiten Abschnitt fällt der Radius r linear ab. In diesem Abschnitt gilt näherungsweise $\Delta\phi \approx -\Delta r$.

Zwischen dem ersten Abschnitt und dem zweiten Abschnitt ist jeweils ein Übergang ausgebildet, der die spiralförmigen Verläufe verbindet. Die Abschnitte sowie die Übergänge sind durch Strich-Punktlinien symbolisch getrennt.

Der Übergang ist nach Art eines Übergangsradius ausgebildet, und kann in einer bevorzugten und dargestellten Ausführung ca. der Breite B der Ausnehmung 25 entsprechen. Um ein Verkeilen oder Verklemmen der Nockenwellenscheibe 13 in der Ausnehmung 25 zu vermeiden, können die Übergänge derart gewählt sein, dass der Abstand zwischen den zwei gegenüberliegenden diametral ausgebildeten Übergängen minimal 90 %, bevorzugt mehr als 95 % der Breite B der Ausnehmung 25 beträgt.

Das jeweilige Vortriebelement 20 erfährt bei einer Umdrehung ($\phi$ = 360°) einen vollständigen Zyklus bzw. Periode. Mit anderen Worten beschrieben, wird das jeweilige Vortriebelement 20 bei einer Umdrehung ($\phi$ = 360°) der Antriebswelle 10 bzw. der Nockenwelle 12 ein einziges Mal in die Zahnstange 30 eingedrückt und ausgedrückt. Durch den Winkelversatz zwischen zwei in der Längsachse X beabstandeten Nockenwellenschreiben 13 beträgt der Phasenversatz $\Delta\phi$ bezogen auf eine Umdrehung (j) = 360°) der Längsachse X 1/16$\phi$. Anders gesagt, muss die Nockenwelle 12 um 22,5° verdreht werden, damit nach dem Eindrücken eines ersten Vortriebelements 20 ein zweites Vortriebelement 20 in einen weiteren Zahnzwischenraum 32 der gleichen Zahnstange 30 eintaucht. Der jeweilige zweite, auf der gegenüberliegenden Seite angeordnete Vortriebzahn 21 wird mit einem Phasenversatz $\Delta\phi$ von 180° in die auf der gegenüberliegenden Seite angeordnete Zahnstange 30 eingedrückt und ausgedrückt. In einer bevorzugten Weiterbildung kann der Phasenversatz $\Delta\phi$ zwischen zwei in der Längsachse benachbarten Vortriebelementen 20 $\Delta\phi$ ≈ 144° betragen. [MM1]

Aus Figur 5 ist ersichtlich, dass das jeweilige Vortriebelement 20 in die Aussparung 55 des Zahnstangengehäuses 50 ragt. Die Aussparung 55 ist nach Art einer Längsnut in das Zahnstangengehäuse 50 entlang der Längsachse X eingearbeitet oder eingeformt und weist zwei Längsseiten 52a, 52c und eine Bodenseite 52b auf. Auf der Längsseite 52a ist innerhalb einer Hinterschneidung 53 in der zweiten Ebene E2 die Zahnstange 30 angeordnet, und auf der gegenüberliegenden Längsseite 52c das Führungsmittel 40, welches in Form einer Kulisse 45 ausgebildet ist. Die Kulisse 45 ist keilförmig mit einer Führungsfläche 46 ausgestaltet und bildet beim Eintauchen oder Eindrücken des Vortriebelements 20 in die Aussparung 55 ein Widerlager auf der der Zahnstange 30 gegenüberliegenden Seite in der Aussparung 55 aus und zwängt das Vortriebelement 20 bzw. den Vortriebzahn 21 in die Zahnstange 30. Beim Eindrücken gleitet das Vortriebelement 20 an der Führungsfläche 46 und wird durch dieses entsprechend in Richtung der Zahnstange 30 geführt.

Weiterhin ist der Figur 5 zu entnehmen, dass in dem Gehäuse 60 weitere Führungsmittel 47, 48 angeordnet sein können, welche den ersten Endbereich des Vortriebelements 20 innerhalb des Gehäuses 60 führen. Die weiteren Führungsmittel 47, 48 können wie die Kulisse 45 keilförmig ausgebildet sein, wobei die Führungsflächen parallel und beabstandet angeordnet sind. Die weiteren Führungsmittel 47, 48 können auf diametralen Seiten des Gehäuses 60 angeordnet sein, wonach das weitere Führungsmittel 47 in dem ersten Gehäuseteil 61 und das zweite weitere Führungsmittel 48 in dem zweiten Gehäuseteil 62 angeordnet ist.

Die weiteren Führungsmittel 47, 48 sind konfiguriert, zusammen mit der Kulisse 45 das jeweilige Vortriebelement 20 in Hubbewegung entlang einer Achse zu führen, wobei diese Achse die Längsachse X nicht schneidet, sondern tangential bzw. sequantial zu dieser ausgerichtet ist. Zur Verdeutlichung ist die Bewegung bzw. die Hubbewegung in Figur 5 mit der Bezugsziffer 22 gekennzeichnet, wobei die Bewegung in einem Winkel von ca. 80° zu der ersten Ebene E1 und der zweiten Ebene E2 gerichtet ist.

Die Weiterbildung gemäß Figur 6 zeigt Führungsmittel 40, die in Form einer Drehachse 42 ausgebildet sind, um die das jeweilige Vortriebelement 20 in einer zyklischen Bewegung, welche ebenfalls mit der Bezugsziffer 22 gekennzeichnet ist, verschwenkt wird.

Die Drehachse 42 kann durch einen entsprechend vorstehenden Lagerzapfen 43 gebildeten sein, der innerhalb der Führungsausnehmung 65 in dem Gehäuse 60 ausgebildet wird. Der Lagerzapfen 43 nimmt beim Eindrücken des jeweiligen Vortriebelements 20 Querkräfte senkrecht zu der Längsachse X auf und bildet somit für das Vortriebelement 20 ein Widerlager, das an dem Vortriebelement 20 entgegen der Zahnstange 30 wirkt.

Ein weiteres Ausführungsbeispiel wird in Figur 7 gezeigt. Im Unterschied zu dem in Figur 5 gezeigten Ausführungsbeispiel sind keine weiteren Führungsmittel 47, 48 vorgesehen, weshalb die Bewegung des jeweiligen Vortriebelements 20 einer überlagerten Dreh- und Hubbewegung entspricht. Das Vortriebelement 20 wird durch die Kopplung mit der Antriebswelle 10 dolchartig in der Aussparung 55 in die Zahnstange 30 gedrückt.

Bezugszeichenliste

| | |
|---|---|
| 1 | Linearantrieb |
| 10 | Antriebswelle |
| 12 | Nockenwelle |
| 13 | Nockenwellenscheibe |
| 14 | Reibfläche |
| 20 | Vortriebelement |
| 21 | Vortriebzahn |
| 22 | Bewegung |
| 23 | Reibfläche |
| 25 | Ausnehmung |
| 26 | Innenfläche |
| 30 | Zahnstange |
| 31 | Zahn |
| 32 | Zahnzwischenraum |
| 33 | Reibfläche |
| 40 | Führungsmittel |
| 42 | Drehachse |
| 43 | Lagerzapfen |
| 45 | Kulisse |
| 47 | weiteres Führungsmittel |
| 48 | weiteres Führungsmittel |
| 50 | Zahnstangengehäuse |
| 51 | Zahnstangengehäuseabschnitt |
| 52a | Längsseite |
| 52b | Bodenseite |
| 52c | Längsseite |
| 53 | Hinterschneidung |
| 55 | Aussparung |
| 60 | Gehäuse |
| 61 | erstes Gehäuseteil |
| 62 | zweites Gehäuseteil |

65     Führungsausnehmung
68     Lager
70     Schlitten
80     Antrieb
85     Getriebe

A1    erster Abstand zwischen 20 bzw. 21
A2    zweiter Abstand zwischen 31
E1    erste Ebene
E2    zweite Ebene
X     Längsachse

**Patentansprüche**

1. Linearantrieb (1), aufweisend

   - eine um eine Längsachse (X) drehbare Antriebswelle (10),
   - mindestens ein einen Vortriebzahn (21) aufweisendes Vortriebelement (20),
   - eine Zahnstange (30), und
   - mindestens ein Führungsmittel (40),
   - wobei das mindestens eine Vortriebelement (20) mit der Antriebswelle (10) derart gekoppelt ist, dass dessen Vortriebzahn (21) bei einer Umdrehung der Antriebswelle (10) um die Längsachse (X) zum Erzeugen eines Vorschubs in einer zyklische Bewegung (22) in die Zahnstange (30) eingedrückt wird, und

   **dadurch gekennzeichnet, dass** das mindestens eine Führungsmittel (40) beim Eindrücken des Vortriebzahns (21) des mindestens einen Vortriebelements (20) in die Zahnstange (30) ein der Zahnstange (30) entgegenwirkendes Widerlager für das mindestens eine Vortriebelement (20) bildet.

2. Linearantrieb (1) nach Anspruch 1,
   **dadurch gekennzeichnet, dass** das mindestens eine Führungsmittel (40) die Bewegung des mindestens einen Vortriebelements (20) in Richtung der Zahnstange (30) umlenkt.

3. Linearantrieb (1) nach einem der Ansprüche 1 oder 2, **dadurch gekennzeichnet, dass** das mindestens eine Führungsmittel (40) die Bewegung um eine Drehachse (42) und/oder entlang einer Kulisse (45) vorgibt.

4. Linearantrieb (1) nach einem der vorgenannten Ansprüche,
   **dadurch gekennzeichnet, dass** die Zahnstange (30) in einer zweiten Ebene (E2) angeordnet ist, die parallel und beabstandet zu einer ersten Ebene (E1) angeordnet ist, welche in der Längsachse (X) liegt.

5. Linearantrieb (1) nach einem der vorgenannten Ansprüche,
   **dadurch gekennzeichnet, dass** das mindestens eine Vortriebelement (20) in ein Zahnstangengehäuse (50) ragt.

6. Linearantrieb (1) nach Anspruch 5,
   **dadurch gekennzeichnet, dass** das mindestens eine Vortriebelement (20) in eine Aussparung (55) des Zahnstangengehäuses (50) ragt, dass die Zahnstange (30) auf einer ersten Seite (52a) angeordnet ist, und dass das Führungsmittel (40) auf der gegenüberliegenden zweiten Seite (52c) angeordnet ist.

7. Linearantrieb (1) nach einem der vorgenannten Ansprüche,
   **dadurch gekennzeichnet, dass** die Kulisse (45) eine keil- und/oder bogenförmig Führungsfläche (46) aufweist, und/oder dass die Umlenkung des mindestens einen Vortriebzahns (21) durch die Kulisse (45) linear und/oder nicht-linear erfolgt.

8. Linearantrieb (1) nach einem der vorgenannten Ansprüche,
   **dadurch gekennzeichnet, dass** die Antriebswelle (10) eine Nockenwelle (12) mit mindestens einer Nockenwellenscheibe (13) umfasst, und dass die Nockenwellenscheibe (13) trieblich mit dem Vortriebzahn (20) gekoppelt ist.

9. Linearantrieb (1) nach einem der vorgenannten Ansprüche,
   **dadurch gekennzeichnet, dass** das mindestens eine Vortriebelement (20) eine Ausnehmung (25) aufweist, die die Antriebswelle (10) umgreift, und dass bei einer Umdrehung der Antriebswelle (10) der mindestens eine Vortriebzahn (21) des mindestens einen Vortriebelements (20) mindestens einmal in die Zahnstange (30) zur Erzeugung des Vorschubs eingedrückt und ausgedrückt wird.

10. Linearantrieb (1) nach einem der vorgenannten Ansprüche,
    **dadurch gekennzeichnet, dass** die Nockenwellenscheibe (13) den mindestens einen Vortriebzahn (21) zwischen dem eingedrückten und dem ausgedrückten Zustand mit konstanter Geschwindigkeit in die Zahnstange (30) ein- und/oder ausdrückt.

11. Linearantrieb (1) nach einem der vorgenannten Ansprüche,
    **dadurch gekennzeichnet, dass** die Antriebswelle (10) eine Kurbelwelle umfasst.

12. Linearantrieb (1) nach einem der vorgenannten Ansprüche,
    **dadurch gekennzeichnet, dass** das mindestens eine Vortriebelement (20) über eine Pleuelstange mit der Antriebswelle (10) gekoppelt ist.

**13.** Linearantrieb (1) nach einem der vorgenannten Ansprüche,
**dadurch gekennzeichnet, dass** der jeweilige Vortriebzahn (21) und/oder der Zahn (31) korrespondierend und/oder symmetrisch ausgebildet sind bzw. ist.

**14.** Linearantrieb (1) nach einem der vorgenannten Ansprüche,
**dadurch gekennzeichnet, dass** mindestens zwei Vortriebelemente (20) vorgesehen sind, und dass der mindestens eine Vortriebzahn (21) der mindestens zwei Vortriebelemente (20) mit einem Phasenversatz ($\Delta\varphi$) in die Zahnstange (30) eingedrückt und/oder ausgedrückt wird.

**15.** Linearantrieb (1) nach Anspruch 14,
**dadurch gekennzeichnet, dass** für den Phasenversatz ($\Delta\varphi$) der zyklischen Bewegung der wenigstens zwei Vortriebelemente (20) in Bezug auf eine Umdrehung ($\varphi$) der Antriebswelle (10) folgendes gilt: $1/256 \, \varphi \leq \Delta\varphi \leq \frac{1}{2} \, \varphi$.

**16.** Linearantrieb Anspruch 14 oder 15,
**dadurch gekennzeichnet, dass** die Zähne (31) der Zahnstange (30) ein einem ersten Abstand (A1) angeordnet sind und dass die Vortriebzähne (21) in einem zweiten Abstand (A2) angeordnet sind, wobei der erste Abstand (A1) ungleich zu dem zweiten Abstand (A2) ist, also A1 $\neq$ A2 gilt.

**17.** Linearantrieb (1) nach einem der vorgenannten Ansprüche,
**dadurch gekennzeichnet, dass** die mindestens zwei Vortriebzähne (21) in einer Reihe entlang einer Achse parallel zur der Längsachse (X) angeordnet sind.

**18.** Linearantrieb (1) nach einem der vorgenannten Ansprüche,
**dadurch gekennzeichnet, dass** ein Schlitten (70) vorgesehen ist, und dass an dem Schlitten (70) die Antriebswelle (10) und der mindestens eine Vortriebzahn (21) angeordnet sind.

**19.** Linearantrieb (1) nach einem der vorgenannten Ansprüche,
**dadurch gekennzeichnet, dass** ein Antrieb (80) vorgesehen ist, wobei der Antrieb (80) die Antriebswelle (10) antreibt.

**20.** Linearantrieb (1) nach Anspruch 19,
**dadurch gekennzeichnet, dass** zwischen dem Antrieb (80) und der Antriebswelle (10) ein Getriebe (85), insbesondere ein Planetengetriebe, angeordnet ist.

**21.** Längsverstelleinheit, aufweisend einen Linearantrieb (1) nach einem der vorgenannten Ansprüche.

**22.** Kraftfahrzeug, aufweisend eine Längsverstelleinheit nach Anspruch 21.

**Claims**

**1.** Linear drive (1), comprising

- a drive shaft (10), which is rotatable around a longitudinal axis (X),
- at least one propulsion element (20) comprising a propulsion tooth (21),
- a gear rack (30), and
- at least one guidance means (40),
- wherein the at least one propulsion element (20) is coupled to the drive shaft (10) such that, when the drive shaft (10) is rotated around the longitudinal axis (X), its propulsion tooth (21) is pressed into the gear rack (30) in order to generate a propulsion force in a cyclic motion (22), and

**characterized in that**,
when the propulsion tooth (21) of the at least one propulsion element (20) is pressed into the gear rack (30), the at least one guidance means (40) forms a counteracting abutment for the at least one propulsion element (20).

**2.** Linear drive (1) in accordance with claim 1,
**characterized in that**
the at least one guidance means (40) redirects the movement of the at least one propulsion element (20) into the direction of the gear rack (30).

**3.** Linear drive (1) in accordance with either of claims 1 or 2,
**characterized in that**
the at least one guidance means (40) determines the movement around an axis of rotation (42) and/or along a motion link (45).

**4.** Linear drive (1) in accordance with any of the preceding claims,
**characterized in that**
the gear rack (30) is arranged in a second plane (E2) which is arranged parallel and at a distance to a first plane (E1) which lies in the longitudinal axis (X).

**5.** Linear drive (1) in accordance with any of the preceding claims,
**characterized in that**
the at least one propulsion element (20) extends into a gear rack housing (50).

**6.** Linear drive (1) in accordance with claim 5,

**characterized in that**
the at least one propulsion element (20) extends into a cutout (55) of the gear rack housing (50), **in that** the gear rack (30) is arranged on a first side (52a), and **in that** the guidance means (40) is arranged on the opposite second side (52c).

7. Linear drive (1) in accordance with any of the preceding claims,
**characterized in that**
the motion link (45) comprises a wedge shaped or an arc shaped guidance surface (46), and/or **in that** the redirecting of the at least one propulsion tooth (21) is carried out linearly or nonlinearly by means of the motion link (45).

8. Linear drive (1) in accordance with any of the preceding claims,
**characterized in that**
the drive shaft (10) comprises a cam shaft (12) having at least one cam shaft disc (13), and **in that** the cam shaft disc (13) is drivingly coupled to the propulsion tooth (20).

9. Linear drive (1) in accordance with any of the preceding claims,
**characterized in that**
the at least one propulsion element (20) comprises a cutout (25) which engages around the drive shaft (10), and **in that**, when the drive shaft (10) is rotated, the at least one propulsion tooth (21) of the at least one propulsion element (20) is pressed at least once into and out of the gear rack (30) in order to generate the propulsion force.

10. Linear drive (1) in accordance with any of the preceding claims,
**characterized in that**
the cam shaft disc (13) presses the at least one propulsion tooth (21) into and/or out of the gear rack (30) back and forth between the inserted state and the removed state at a constant speed.

11. Linear drive (1) in accordance with any of the preceding claims, **characterized in that** the drive shaft (10) comprises a crank shaft.

12. Linear drive (1) in accordance with any of the preceding claims, **characterized in that** the at least one propulsion element (20) is coupled to the drive shaft (10) by means of a connecting rod.

13. Linear drive (1) in accordance with any of the preceding claims, **characterized in that** the respective propulsion tooth (21), and/or the tooth (31), is(are) implemented in correspondence and/or symmetrically.

14. Linear drive (1) in accordance with any of the preceding claims, **characterized in that** at least two propulsion elements (20) are provided, and **in that** the at least one propulsion tooth (21) of the at least two propulsion elements (20) is pressed into and/or out of the gear rack (30) with a phase offset ($\Delta\varphi$).

15. Linear drive (1) in accordance with claim 14, **characterized in that**, for the phase offset ($\Delta\varphi$) of the cyclic motion of the at least two propulsion elements (20) in relation to a rotation ($\varphi$) of the drive shaft (10), the following is true: $1/256\ \varphi \leq \Delta\varphi \leq \frac{1}{2}\ \varphi$.

16. Linear drive (1) in accordance with claim 14 or 15, **characterized in that** the teeth (31) of the gear rack (30) are arranged at a first distance (A1) to each other, and **in that** the propulsion teeth (21) are arranged at a second distance (A2) to each other, wherein the first distance (A1) is unequal to the second distance (A2), meaning the following is true: $A1 \neq A2$.

17. Linear drive (1) in accordance with any of the preceding claims, **characterized in that** the at least two propulsion teeth (21) are arranged in a row along an axis parallel to the longitudinal axis (X).

18. Linear drive (1) in accordance with any of the preceding claims,
**characterized in that**
a carriage (70) is provided, and **in that** the drive shaft (10) and the at least one propulsion tooth (21) are arranged on the carriage (70).

19. Linear drive (1) in accordance with any of the preceding claims, **characterized in that** a drive (80) is provided, wherein the drive (80) drives the drive shaft (10).

20. Linear drive (1) in accordance with claim 19, **characterized in that** a transmission (85), in particular a planetary gear, is arranged between the drive (80) and the drive shaft (10).

21. Longitudinally adjustable unit comprising a linear drive (1) in accordance with any of the preceding claims.

22. Motor vehicle comprising a longitudinally adjustable unit in accordance with claim 21.

## Revendications

1. Entraînement linéaire (1) comprenant :

   - un arbre d'entraînement (10) tournant autour d'un axe longitudinal (X),
   - au moins un élément d'avancement (20) comportant une dent d'avancement (21),
   - une crémaillère (30), et
   - au moins un moyen de guidage (40),
   - l'élément d'avancement (20) étant couplé à l'arbre d'entraînement (10) pour que lors de la rotation de l'arbre d'entraînement (10) autour de l'axe longitudinal (X), sa dent d'avancement (21) soit engagé dans la crémaillère (30) pour produire un avancement par un mouvement cyclique (22), et
   entraînement **caractérisé en ce que**
   au moins ce moyen de guidage (40), par l'enfoncement de la dent d'avancement (21) de cet élément d'avancement (20) dans la crémaillère (30) forme un appui de réaction à la crémaillère (30) pour au moins cet élément d'avancement (20).

2. Entraînement linéaire (1) selon la revendication 1, **caractérisé en ce que**
   au moins le moyen de guidage (40) dévie le mouvement au moins de cet élément d'avancement (20) en direction de la crémaillère (30).

3. Entraînement linéaire (1) selon l'une des revendications 1 ou 2, **caractérisé en ce que**
   au moins le moyen d'entraînement (40) prédétermine le mouvement autour de l'axe de rotation (42) et/ou le long d'une coulisse (45).

4. Entraînement linéaire (1) selon l'une des revendications précédentes, **caractérisé en ce que**
   la crémaillère (30) est située dans un second plan (E2) parallèle et écarté du premier plan (E1) contenant l'axe longitudinal (X).

5. Entraînement linéaire (1) selon l'une des revendications précédentes, **caractérisé en ce que**
   au moins l'élément d'avancement (20) pénètre dans un boîtier de crémaillère (50).

6. Entraînement linéaire (1) selon la revendication 5, **caractérisé en ce que**

   au moins l'élément d'avancement (20) vient dans un évidement (55) du boîtier de crémaillère (50),
   la crémaillère (30) est située sur un premier côté (52a), et
   le moyen de guidage (40) est sur le second côté (52c), opposé.

7. Entraînement linéaire (1) selon l'une des revendications précédentes, **caractérisé en ce que**
   la coulisse (45) comporte une surface de guidage (46) en forme de coin et/ou de courbe et/ou la déviation au moins de la dent d'avancement (21) se fait de manière linéaire et/ou non linéaire par la coulisse (45).

8. Entraînement linéaire (1) selon l'une des revendications précédentes, **caractérisé en ce que**
   l'arbre d'entraînement (10) comprend un arbre à came (12) avec au moins un disque d'arbre à came (13) et le disque d'arbre à came (13) est couplé dans le sens de l'entraînement avec la dent d'avancement (20).

9. Entraînement linéaire (1) selon l'une des revendications précédentes, **caractérisé en ce que**
   au moins l'élément d'avancement (20) a au moins un évidement (25) qui entoure l'arbre d'entraînement (10) et lors de la rotation d'arbre d'entraînement (10), au moins la dent d'avancement (21) de l'élément d'avancement (20) est engagée et dégagée au moins une fois dans la crémaillère (30) pour produire l'avancement.

10. Entraînement linéaire (1) selon l'une des revendications précédentes, **caractérisé en ce que**
    l'arbre à came (13) engage et/ou dégage dans la crémaillère (30) avec une vitesse constante au moins la dent d'avancement (21) entre l'état engagé et l'état dégagé.

11. Entraînement linéaire (1) selon l'une des revendications précédentes, **caractérisé en ce que**
    l'arbre d'entraînement (10) comporte un vilebrequin.

12. Entraînement linéaire (1) selon l'une des revendications précédentes, **caractérisé en ce que**
    au moins l'élément d'entraînement (20) est couplé à l'arbre d'entraînement (10) par une bielle.

13. Entraînement linéaire (1) selon l'une des revendications précédentes, **caractérisé en ce que**
    la dent d'avancement (21) respective et/ou la dent (31) sont réalisées de façon correspondante et/ou symétrique.

14. Entraînement linéaire (1) selon l'une des revendications précédentes, **caractérisé par**

    - au moins deux éléments d'avancement (20), et
    - au moins une dent d'avancement (21) d'au moins les deux éléments d'avancement (20) est engagée et/ou dégagée de la crémaillère (30) avec un déphasage (Δφ).

15. Entraînement linéaire (1) selon la revendication 14,

**caractérisé en ce que**
pour le déphasage ($\Delta\varphi$) du mouvement cyclique au moins des deux éléments d'avancement (20) par rapport à la rotation ($\varphi$) de l'arbre d'entraînement (10) répond à la relation suivante :

$$1/256\ \varphi \leq \Delta\varphi \leq \tfrac{1}{2}\ \varphi.$$

16. Entraînement linéaire selon la revendication 14 ou 15,
    **caractérisé en ce que**
    les dents (31) de la crémaillère (30) ont un premier intervalle (A1) et les dents d'avancement (21) ont un second intervalle (A2), le premier intervalle (A1) étant différent du second intervalle (A2), c'est-à-dire A1 $\neq$ A2.

17. Entraînement linéaire (1) selon l'une des revendications précédentes, **caractérisé en ce que**
    au moins les deux dents d'avancement (21) sont dans une rangée selon un axe parallèle à l'axe longitudinal (X).

18. Entraînement linéaire (1) selon l'une des revendications précédentes, **caractérisé par**
    un chariot (70) et le chariot (70) comporte l'arbre d'entraînement (10) et au moins une dent d'avancement (21).

19. Entraînement linéaire (1) selon l'une des revendications précédentes, **caractérisé par**
    un entraînement (80), cet entraînement (80) entraînant l'arbre d'entraînement (10).

20. Entraînement linéaire (1) selon la revendication 19,
    **caractérisé par**
    une transmission (85), notamment une transmission planétaire entre l'entraînement (80) et l'arbre d'entraînement (10).

21. Dispositif de réglage longitudinal comprenant un entraînement linéaire (1) selon l'une des revendications précédentes.

22. Véhicule automobile comportant une unité de réglage longitudinal selon la revendication 21.

Fig. 1

Fig. 2

Fig. 3

Fig. 4

Fig. 5

Fig. 6

Fig. 7

c)

a)

d)

b)

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3640197 A1
- DE 4208948 C2
- DE 19642655 C2
- DE 19815283 A1
- DE 102004013009 A1
- DE 102006052936 A1
- EP 0612935 A1